# EUROPEAN PATENT SPECIFICATION

(11) **EP 3 088 617 B1**
(45) Date of publication and mention of the grant of the patent: **14.02.2024**
(21) Application number: 16166671.4
(22) Date of filing: 22.04.2016
(51) Int. Cl.: E03F 5/02, B65D 90/10, E02D 29/12, E03F 11/00, E03B 7/09, E04G 15/06, E04H 5/06, F16L 3/22, F16L 5/00

(54) **WALL WITH A PASSAGEWAY AND A METHOD FOR THE PRODUCTION THEREOF**
WAND MIT EINEM DURCHGANG UND VERFAHREN ZU DESSEN HERSTELLUNG
PAROI AVEC UN PASSAGE ET PROCÉDÉ POUR LA PRODUCTION DE CELUI-CI

(30) Priority: 22.04.2015 FI 20155298
(43) Date of publication of application: 02.11.2016
(73) Proprietor: Uponor Infra Oy, 00240 Helsinki (FI)
(72) Inventor: VESTMAN, Christian, 65101 Vaasa (FI)
(74) Representative: Laine IP Oy

(56) References cited:
- EP-A1- 2 273 170
- JP-A- 2000 078 734
- US-A1- 2014 260 013

## Description

### Technical Field

The present invention relates to wall constructions of cementitious material. Such walls typically form part of three-dimensional constructions, such as concrete boxes, housings or chambers, for example for subterrain installations. In particular the present invention relates to walls formed from cementitious material by moulding and exhibiting at least one passageway extending through the thickness of the walls.

The present invention also concerns a method of producing passageways in walls of cementitious material.

### Background Art

Distribution chambers are used for coupling to underground piping running from and to buildings, such as fresh water pipes, sewage pipes, drainage pipes and septic pipes. Conventionally, the distribution chambers are large prefabricated boxes of reinforced concrete with a bottom slab and an opposite concrete cover to protect the ends of the pipes coupled to them, when buried underground. The pipes are fitted into openings formed in the, typically lateral, walls of the boxes.

Normally all connections to and from the distribution chambers are formed by drilling an opening for the connecting pipes through the concrete wall. This operation is slow and costly. The holes have to be drilled at an angle of 90 degrees against the wall. Further, when pipes laid in the ground are to be introduced into concrete walls, utmost care has to be taken to achieve proper sealing, e.g. to prevent standing water from penetrating into the wall and into the distribution chamber. To that purpose, rubber sealings are typically used.

Various passageways of polymeric pipes through concrete structures are shown in US 2014260013, JP 2000078734 and EP 2273170.

There is a need for passageways (openings) through concrete walls which can be rapidly formed and which can be achieved at angles also different from 90 degrees to provide for additional flexibility of the installation work. This is particularly important when connecting plastic piping to distribution chambers of concrete material. Additional needs relate to the provision of water tight couplings of the pipes to the opening of the distribution chambers.

### Summary of Invention

Based on the above, the present invention aims at eliminating at least a part of the problems relating to the art and at providing a wall structure in which openings for pipes and similar passageways can readily be formed.

The present invention also aims at achieving a method of forming a passageway through a wall of a structure comprising moulded cementitious material.

The invention is defined by the claims 1-14, and in particular by the wall of claim 1 and by the method of claim 11.

The present invention is based on the concept of providing a wall which comprises a first portion formed by a panel of a polymeric material which has a thickness and a first side and an opposite second side, which are part of the corresponding sides of the wall; and a second portion consisting of cementitious material, the second portion optionally having at least one reinforcing component. The panel is preferably planar and in the panel there is formed at least one opening which opens on one side of the wall and extends through the thickness of the panel to the other, opposite side of the wall. The opening will provide a passageway through the wall.

The present invention further provides a method of forming a passageway through a wall of a structure comprising moulded cementitious material, comprising
- arranging into the wall a first portion with a panel of a polymeric material, which panel has a thickness and which exhibits a first side and an opposite second side, which are part of the corresponding sides of the wall; and
- forming into the panel at least one, typically two or more openings, each opening extending through the thickness of panel such as to form a passageway through the wall.

More specifically, the present wall is characterized by what is stated in the characterizing part of claim 1.

The method according to the present invention is characterized by what is stated in the characterizing part of claim 11.

Considerable advantages are obtained by the present invention. Thus, openings are much more readily formed into the thermoplastic panels than into concrete walls by simple drilling allowing for ease of coupling to underground piping running from and to buildings, such as fresh water pipes, sewage pipes, drainage pipes and septic pipes. The angle of the opening and the passageway through the wall can be selected at will.

To achieve water tightness between the pipes and the panels, sockets or spigot ends can be assembled in the openings. When installing such sockets or spigots, in particular of plastic material, they can be welded to the panels by conventional plastic welding to achieve good sealing without the need to resort to separate sealing rings. Connection of pipe spigot or respectively socket ends to the prewelded connection points in the panel is fast and enables a secure gasketed tight solution.

Further features and advantages will be discussed with reference to embodiments of the present invention.

### Brief Description of Drawings

Figure 1 shows in a perspective view an embodiment of the present thermoplastic panel;
Figure 2 shows in side-view a cross-section of the embodiment of Figure 1; and
Figure 3 shows in a perspective view an embodiment of the present thermoplastic panel incorporated into a concrete wall and provided with a plurality of openings extending through the panel.

### Embodiments

In the present context, "polymer panel" and "panel of polymeric material" stands for a plate-like structure, which has two opposite surface plates, which are composed by a polymeric material, for example a thermoplastic material, such as a polyolefin, polyester or polyamide, or from a thermosetting material, for example a reinforced thermosetting material. Generally, it is preferred that the surface plates of the panel are weldable by polymer welding such that they are capable of being provided with plastic sockets that can be sealed against the surface plates by such welding. In particular, the present polymer panel comprises a multi-walled panel, formed by two or more plates, which are spaced apart from each other. Such a panel structure gives a combination of high strength and light weight; such a panel structure provides for a combination of rigidity and/or stiffness and buckling resistance.

"Cementitious material" stands for a material, which is composed of a hydraulic binder, such as cement, conventionally mixed with filler and ballast and optionally reinforcing components. As a typical example of such a material, reinforced concrete and various engineered cementitious composites, can be mentioned. However, other hard mineral materials are also encompassed by the term.

"Tubular sleeve" stands for means capable of providing sealable connection of inserted pipes into openings formed in the polymeric panel. Typically, such means are represented by tubular pipe ends, such as spigots or sockets. Preferably, the tubular sleeves are manufactures from durable materials, such as metals or preferably polymers. In particular, tubular sleeves of thermoplastic materials are used.

As discussed above, the present technology provides a structure with a wall formed by moulded cementitious material.

Basically, in one embodiment, a first portion of the wall is formed of at least one panel of a polymeric material. A second portion of the wall has two opposing surfaces with a thickness of moulded cementitious material there between. The first portion of the wall is coupled to the second portion of the wall such that the perimeter of the first portion of the wall lies at least partially between the opposing surfaces of the second portion of the wall.

Thus, in practice, in the wall there is at least one panel of polymeric material fitted into the surrounding wall portion formed by moulded cementitious material.

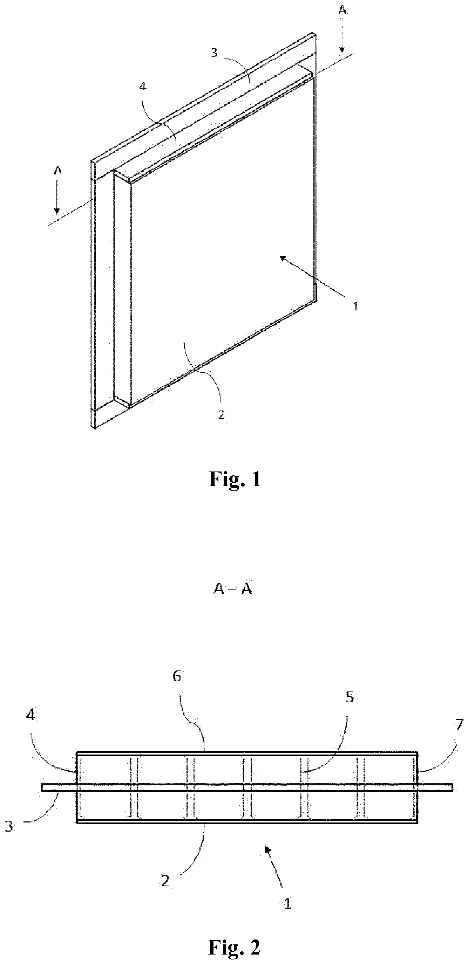

Figures 1 and 2 show an exemplifying embodiment of the present panel. In the drawings, reference numeral 1 is used for designating the panel, which in the embodiment shown comprises a panel having two planar and parallel surfaces. As will appear from the drawing, typically, the second surface is being spaced apart from the first surface and arranged on the opposite side of the first surface with respect to a geometric central plane between the first and the second surfaces. One of the surfaces, will form the external side of the wall and the other surface will form the internal side of the wall, i.e. the side in the interior of the three dimensional structure.

The edge portions peripherally adjoining the first and the second surfaces are marked with reference numerals 4 and 7. They further comprise a console part 3 extending outwards from the edge portions in a plane essentially parallel with the central plane.

The console part according to the embodiments shown in the drawings comprises an outwards extending flange, in particular the console part comprises a flange which covers 10 to 100 % of the peripheral length of the edge portions. In the present context "peripheral length" is used synonymously with perimeter.

A particular advantage of having the panel fixed to the surrounding second portion of the wall by using flanges, which extend into the second portion, rather than securing the panel by fixtures extending from the second portion into the panel, is that an opening can without difficulty be formed in any area of the panel.

The panel of polymeric material can be a multi-walled panel construction.

In the drawings, the panel 1 is formed by a double-walled panel formed by two surface plates 2, 6 spaced apart and joined together by a plurality of reinforcing internal walls 5, which also give the double-walled panel high stiffness.

In one embodiment, a suitably stiff and rigid panel is obtained by providing a double-walled panel having parallel, reinforcing internal walls which are spaced apart from each other no more than 0.1 to 2.5 times, in particular 0.5 to 2.0 times, for example 0.75 to 1.5 times, the diameter of an opening which is to be formed throughout the panel.

The reinforcing internal walls are typically rigid. They will reinforce the panel. The reinforcing internal walls can be linear or curved. "Curved" includes bent shapes as well as structures, which in section along the central plane of the panel are elliptical or circular. Combinations of linear and curved walls of various shapes are also possible.

It is particularly preferred that the panel has a rigidity and stiffness which together will contribute to making the panel buckling resistant when subjected to the pressure caused by, e.g., standing water, when the wall structure is subjected to the conditions encountered for subterrain installations.

Panels capable of being used in the present technology are disclosed, for example, in WO2013/057373 and WO2013/057374 Such panels are typically manufactured from thermoplastic materials, such as polyolefins, and they have a structure which is comprised of elongated hollow profiles, with straight and parallel central axes, the profiles being laterally welded together to form a double-walled panel structure. Typically, the cross-section of the hollow profiles is rectangular to give panels with at least essentially planar sides. The panels are rigid. They are typically self-supporting at span widths of up to 5,000 mm transversally to the central axes of the profiles, and up to 20,000 mm in the direction of the central axes of the profiles.

Naturally also other double- and multi-walled panels can be used. For example panels formed by parallel I-bar shaped plastic profiles, which are laterally welded together to form large panels are possible. The double- or multi-walled panels can further be formed by thinner surface sheets of thermoplastic materials, which are welded or in another fashion fixed together to reinforcing bars running in parallel to the surface planes of the sheets.

The ratio between the thickness of the panel and the distance between two reinforcing bars or walls transversally to the thickness of the panel is in one embodiment 0.1 to 1.0, typically 0.2 to 0.8.

In another embodiment, the ratio between the thickness of the panel and the distance between two reinforcing bars or walls transversally to the thickness of the panel is in one embodiment 1.01 to 10, typically 1.2 to 5.0. These ratios will provide stiff and rigid panels.

In one embodiment, the polymeric panel comprises essentially only thermoplastic material.

In one embodiment, the thickness of the panel, i.e. the first portion, is 0.1 to 2 times, typically 0.2 to 1 time, the thickness of the adjacent cementitious wall, i.e. the second portion. In one particular embodiment, the thicknesses of the two portions are roughly the same, with the first portion being at maximum of equal thickness to that of the second portion. At minimum the thickness of the first portion is at least 0.5 times that of the second portion.

Typically, there can be two or more polymeric panels inserted into the second portion of the wall consisting of cementitious material. The panels can be inserted into different openings 10 in the second portion of the wall. It is also possible to have several overlapping (or sequential) panels in the same opening in the second portion of the wall to secure sufficient stiffness. The total area of a plurality of polymeric panels is about 0.2 to 1.5 times the area of the second portion.

In one embodiment, the first portion forms an integral part of the wall with the second portion. For example, the panel is flush-mounted in the wall so as to provide a smooth surface.

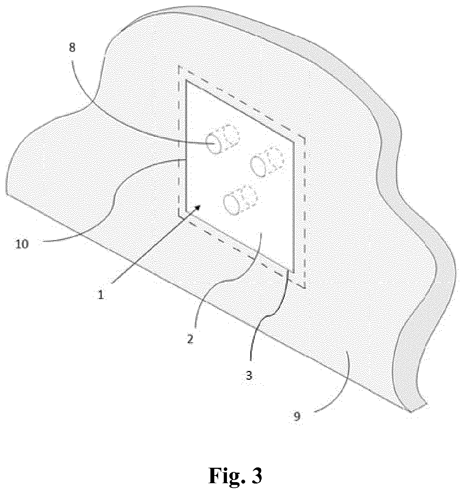

Figure 3 illustrates how a panel according to the embodiments of Figures 1 and 2 can be incorporated into a wall to become an integral part thereof. Reference numeral 9 designates a second portion of a wall of a hard material, preferably a cementitious material. Into the second portion of the wall there is formed an opening 10, which defines an area which is taken up by a panel 1 of the kind discussed above. The flanges 3 are marked with hatched lines to indicate that they are embedded into the material of the second portion of the wall 9.

The flanges will contribute to sealing off the seam between the panel and the surrounding wall against water.

Further, as can be seen, the panel 1 comprises several openings 8 formed into and extending through the polymeric material. These can be drilled with ease at a preselected angle.

The openings formed in a panel of the above kind have generally a diameter of about 1 to 1000 mm, in particular 5 to 750 mm, for example 10 to 500 mm.

The openings 8 thus formed into and extending through the panel 1 of the polymeric material can be provided with coupling means, such as tubular sleeves, i.e. spigots or sockets (not shown). The tubular sleeve comprises for example a spigot or socket capable of receiving a pipe end. Further, the outer surface of the tubular sleeve can be sealed against the walls of the opening e.g. to reduce or eliminate leaking of fluid between the outer surface of the tubular sleeve and the walls of the opening.

When a pipe end is inserted into the opening or into the tubular sleeve, it can be further sealed against the wall of the opening or sleeve. To that aim, the pipe can be provided with a sealing collar, for example in the form of a flange, which can be sealed against the wall abutting with the sealing collar to reduce or eliminate leaking.

In a wall of the present kind, the hardened material of the second portion contacts with the first portion in the wall planes on at least three sides. Typically, the first portion is laterally (i.e. in the direction of its central axes) surrounded by the second portion.

Generally, in for example a distribution chamber (as well as other concrete boxes) there can be one or two and up to 10 panels of polymeric material on one side of its structure. Thus, there can be a plurality of walls, wherein at least one wall, for example two walls or a plurality of walls, comprise a panel with openings, forming passageways through the walls.

The geometric shape of the panel is not limited to quadratic or rectangular, also archshaped and circular shapes are possible.

Based on the above, the present technology also provides a method of forming a passageway through a wall of a structure comprising cementitious material, which is moulded, for example comprises preformed concrete elements or is moulded on-site.

The method comprises the steps of
- arranging into the wall of the cementitious material a panel of a polymeric material, which panel extends through the wall and which forms two opposite surfaces of the wall in a first portion of the wall, and
- forming into the panel at least one opening which extends through the panel and which forms a passageway through the wall.

In one embodiment, the method is implemented in connection with the moulding of a wall of cementitious material in a mould: Into that mould, a panel of a polymeric material, having two opposite sides, which form outer surfaces at a first portion of the wall, is incorporated at a predetermined position. Unhardened cementitious material is introduced into the mould, such that the cementitious material essentially does not cover the opposite sides of the panel of polymeric material. The cementitious material is then hardened in the mould to form a wall structure having at least one portion formed by the polymeric panel as a "window".

In another embodiment, the method is carried out by providing a wall having an opening formed therein, defined by its edges, placing a panel of a polymeric material, which has a perimeter at least roughly corresponding to the edges of the opening such that there is a seam zone formed between the edges of the opening and the perimeter of the panel. The panel is then fixed to the opening by applying a hardening material, such as a cementitious material, to said seam zone. Finally, the material is allowed to harden. This embodiment is particularly useful for field installations.

During hardening the cementitious material contacts with an edge portion between the surfaces of the panel to couple the panel to the wall. As discussed above, it is preferred that the edge portions of the panel have recesses or flanges for enhancing the contact of the hardening material with the panel.

Into the panel, one or several openings are formed, for example by drilling. The drilling is carried out such that the opening extends through the thickness of the panel. For pipe connections, a tubular sleeve is the inserted into to the opening. The outer surface of the tubular conduit is sealed against the walls of the opening e.g. in order to reduce or eliminate leaking of fluid between the outer surface of the tubular conduit and the walls of the opening.

The tubular sleeve is capable of accommodating a pipe end, which can further be sealed against the sleeve with a flange attached to the pipe end.

### Industrial Applicability

The present structures are suitable as walls in, to mention some examples, inspection chambers; coupling chambers; pumping chambers; and distribution chambers, for example coupling chambers of the kind conventionally used for coupling to underground piping running from and to buildings, such as fresh water pipes, sewage pipes, drainage pipes and septic pipes.

Various other applications as also possible, such as concrete wells and culverts.

In one embodiment, the ends of tubular conduits can be passed through the wall of the concrete structure open into the interior to allow for mounting of coupling means to said ends on the interior side of the structure.

### Reference Signs List

- 1: panel
- 2: surface plate
- 3: console part
- 4, 7: edge of panel
- 5: reinforcing internal wall
- 6: surface plate
- 8: opening
- 9: second portion of wall
- 10: opening

### Citation List

### Patent Literature

WO2013/057373
WO2013/057374
US 2014260013
JP 2000078734
EP 2273170

## Claims

1. A wall of a structure comprising moulded cementious material, wherein said wall comprises a first portion and a second portion, wherein the first portion is formed by a panel (1) of a polymeric material, wherein said panel (1) has a passageway formed therein, said first portion being coupled to said second portion of the wall (9), the second portion of the wall (9) consisting of the moulded cementitious material,
**characterized in that** the panel (1) has been manufactured from thermoplastic materials and has a structure, which is comprised of elongated hollow profiles, with straight and parallel central axes, the profiles being laterally welded together to form a double-walled panel

2. The wall according to claim 1, wherein the first portion of the wall has a first thickness and the second portion of the wall (9) has a second thickness, the first thickness being 0.1 to 2 times, typically 0.2 to 1 times the second thickness.

3. The wall according to any of the preceding claims, wherein the panel (1) comprises an opening (8) formed into and extending through the polymeric material, said opening (8) preferably comprising a tubular conduit.

4. The wall according to claim 3, wherein the wall further comprises a tubular sleeve having an outer surface, inserted into the opening (8) formed into and optionally extending through the panel (1) of the polymeric material, said tubular sleeve preferably being sealed against the walls of the opening (8), e.g. to reduce or eliminate leaking of fluid between the outer surface of the tubular conduit and the walls, preferably said sleeve is welded to the panel (1).

5. The wall according to any of claim 4, wherein the tubular conduit is provided with a sealing collar, for example in the form of a flange, which can be sealed against the wall abutting with the sealing collar to reduce or eliminate leaking of fluid between the outer surface of the tubular conduits and said wall.

6. The wall according to any of the preceding claims, wherein the panel (1) of polymeric material comprises:
- a first surface plate (2);
- a second surface plate (6), which is being spaced apart from the first surface plate (2) and arranged on the opposite side of the first surface plate (2) with respect to a geometric central plane between the first surface plate (2) and the second surface plate (6); and
- edge portions (4, 7) peripherally adjoining the first surface plate (2) and the second surface plate (6), said edge portions further comprising a console part (3) extending outwards from the edge portions (4, 7) in a plane essentially parallel with the central plane, said console part (3) comprises an outwards extending flange, in particular the console part (3) comprises a flange which covers 10 to 100 % of the peripheral length of the edge portions (4, 7).

7. The wall according to any of the preceding claims, wherein the panel (1) is coupled to the second portion of the wall (9) by hardened cementitious material.

8. The wall according to any of the preceding claims, wherein the material of the first surface plate (2) is selected from thermoplastic materials, such as polyolefins, polyesters and polyamides, and from thermosetting materials, for example reinforced thermosets.

9. A concrete structure comprising a moulded cementitious material, and having a plurality of walls, wherein at least one of the walls is a wall according to any of claims 1 to 8.

10. The concrete structure according to claim 9, comprising an inspection chamber, a coupling chamber or a pumping chamber, wherein preferably the ends of tubular conduits passed through the wall of a polymeric panel in the concrete structure open into a coupling chamber for allowing mounting of coupling means to said ends.

11. A method of forming a passageway through the wall according to any of claim 1 to 8, comprising:
- arranging into the wall the panel (1) of the polymeric material, which panel (1) extends through the wall and which forms two opposite surface plates (2, 6) of the wall in a first portion of the wall, and
- forming into the panel (1) an opening (8) which extends through the panel (1) and which forms a passageway through the wall,
**characterized in that** the panel (1) has been manufactured from thermoplastic materials and has a structure, which is comprised of elongated hollow profiles, with straight and parallel central axes, the profiles being laterally welded together to form a double-walled panel

12. The method according to claim 11, comprising the step of providing a mould defining the shape of the wall, incorporating into the mould, at a predetermined position, the panel (1) of a polymeric material, wherein two opposite surface plates (2, 6) form outer surfaces at a first portion of the wall, introducing unhardened cementitious material into the mould, such that the cementitious material essentially does not cover the two opposite surface plates (2, 6) of the panel (1) of polymeric material, and hardening the cementitious material in the mould.

13. The method according to claim 11, comprising the step of providing the wall having an opening (10) formed in the wall, defined by its edges, placing the panel (1) of the polymeric material, which has a perimeter at least roughly corresponding to the edges of the opening (10) such that there is a seam zone formed between the edges of the opening (10) and the perimeter of the panel (1), and fixing the panel (1) to the opening (10) by applying a hardening material, such as a cementitious material, to said seam zone, and allowing the material to harden.

14. The method according to any of claims 11 to 13, wherein the panel (1) has a thickness which is 0.1 to 2 times, typically 0.2 to 1 times the thickness of the wall at the portions formed by hardened cementitious material, and wherein the material of the first surface plate (2) is selected from thermoplastic materials, such as polyolefins, polyesters and polyamides, and from thermosetting materials, for example reinforced thermosets.

## Patentansprüche

1. Wand einer Struktur, die ein geformtes zementöses Material umfasst, wobei die Wand einen ersten Abschnitt und einen zweiten Abschnitt umfasst, wobei der erste Abschnitt von einem Panel (1) aus einem Polymermaterial gebildet wird, wobei das Panel (1) einen Durchgang darin gebildet aufweist, wobei der erste Abschnitt mit dem zweiten Abschnitt der Wand (9) gekoppelt ist, wobei der zweite Abschnitt der Wand (9) aus dem geformten zementösen Material besteht,
**dadurch gekennzeichnet, dass** das Panel (1) aus thermoplastischen Materialien hergestellt wurde und eine Struktur aufweist, die längliche hohle Profile mit geraden und parallelen Mittelachsen umfasst, wobei die Profile seitlich aneinandergeschweißt sind, um ein doppelwandiges Panel zu bilden.

2. Wand nach Anspruch 1, wobei der erste Abschnitt der Wand eine erste Dicke aufweist und der zweite Abschnitt der Wand (9) eine zweite Dicke aufweist, wobei die erste Dicke das 0,1- bis 2-Fache, typischerweise 0,2- bis 1-Fache der zweiten Dicke beträgt.

3. Wand nach einem der vorstehenden Ansprüche, wobei das Panel (1) eine Öffnung (8), die in dem Polymermaterial gebildet und sich durch dieses erstreckt, umfasst, wobei die Öffnung (8) bevorzugt eine röhrenförmige Leitung umfasst.

4. Wand nach Anspruch 3, wobei die Wand weiter einen röhrenförmigen Mantel aufweist, der eine Außenoberfläche, in die Öffnung (8) eingesetzt aufweist, die in dem Panel (1) aus dem Polymermaterial gebildet ist und sich optional durch dieses erstreckt, wobei der röhrenförmige Mantel bevorzugt zu den Wänden der Öffnung (8) abgedichtet ist, z. B. um Durchdringen von Fluid zwischen der Außenoberfläche der röhrenförmigen Leitung und den Wänden zu verringern oder zu beseitigen, wobei der Mantel bevorzugt an das Panel (1) geschweißt ist.

5. Wand nach Anspruch 4, wobei die röhrenförmige Leitung mit einem Dichtring bereitgestellt ist, zum Beispiel in der Form eines Flansches, der zu den Wänden abgedichtet sein kann, die an dem Dichtring anliegen, um Durchdringen von Fluid zwischen der Außenoberfläche der röhrenförmigen Leitungen und der Wand zu verringern oder zu beseitigen.

6. Wand nach einem der vorstehenden Ansprüche, wobei das Panel (1) aus Polymermaterial Folgendes umfasst:
- eine erste Oberflächenplatte (2);
- eine zweite Oberflächenplatte (6), die von der ersten Oberflächenplatte (2) beabstandet ist und an der entgegengesetzten Seite der ersten Oberflächenplatte (2) in Bezug auf eine geometrische Mittelebene zwischen der ersten Oberflächenplatte (2) und der zweiten Oberflächenplatte (6) angeordnet ist; und
- Randabschnitte (4, 7), die umfänglich an die erste Oberflächenplatte (2) und die zweite Oberflächenplatte (6) angrenzen, wobei die Randabschnitte weiter ein Konsolenteil (3) umfassen, das sich von den Randabschnitten (4, 7) in einer Ebene, die im Wesentlichen parallel zur Mittelebene ist, nach außen erstreckt, wobei das Konsolenteil (3) einen sich nach außen erstreckenden Flansch umfasst, wobei das Konsolenteil (3) insbesondere einen Flansch umfasst, der 10 bis 100 % der Umfangslänge der Randabschnitte (4, 7) abdeckt.

7. Wand nach einem der vorstehenden Ansprüche, wobei das Panel (1) mit dem zweiten Abschnitt der Wand (9) durch gehärtetes zementöses Material gekoppelt ist.

8. Wand nach einem der vorstehenden Ansprüche, wobei das Material der ersten Oberflächenplatte (2) aus thermoplastischen Materialien, wie Polyolefine, Polyester und Polyamide, und aus duroplastischen Materialien, zum Beispiel verstärkte Duroplaste, ausgewählt ist.

9. Betonstruktur, die ein geformtes zementöses Material umfasst und eine Vielzahl von Wänden aufweist, wobei mindestens eine der Wände eine Wand nach einem der Ansprüche 1 bis 8 ist.

10. Betonstruktur nach Anspruch 9, die eine Prüfkammer, eine Kopplungskammer oder eine Pumpkammer umfasst, wobei die Enden von röhrenförmigen Leitungen, die durch die Wand eines Polymerpanels in der Betonstruktur durchführen, sich bevorzugt in eine Kopplungskammer öffnen, um eine Montage von Kopplungsmitteln an den Enden zu ermöglichen.

11. Verfahren zum Bilden eines Durchgangs durch die Wand nach einem der Ansprüche 1 bis 8, umfassend:
- Anordnen des Panels (1) aus dem Polymermaterial in der Wand, wobei sich das Panel (1) durch die Wand erstreckt und zwei gegenüberliegende Oberflächenplatten (2, 6) der Wand in einem ersten Abschnitt der Wand bildet, und
- Bilden einer Öffnung (8) in dem Panel (1), die sich durch das Panel (1) erstreckt und die einen Durchgang durch die Wand bildet,
**dadurch gekennzeichnet, dass** das Panel (1) aus thermoplastischen Materialien hergestellt wurde und eine Struktur aufweist, die längliche hohle Profile mit geraden und parallelen Mittelachsen umfasst, wobei die Profile seitlich aneinandergeschweißt sind, um ein doppelwandiges Panel zu bilden.

12. Verfahren nach Anspruch 11, umfassend den Schritt zum Bereitstellen einer Gussform, die die Form der Wand definiert, Einbringen, bei einer vorgegebenen Position, des Panels (1) aus Polymermaterial in die Gussform, wobei zwei gegenüberliegende Oberflächenplatten (2, 6) Außenoberflächen bei einem ersten Abschnitt der Wand bilden, Einbringen von ungehärtetem zementösen Material in die Gussform, sodass das zementöse Material im Wesentlichen die zwei gegenüberliegenden Oberflächenplatten (2, 6) des Panels (1) aus Polymermaterial nicht abdeckt, und Härten des zementösen Materials in der Gussform.

13. Verfahren nach Anspruch 11, umfassend den Schritt zum Bereitstellen der Wand, die eine Öffnung (10) in der Wand gebildet aufweist, die von ihren Rändern definiert wird, Platzieren des Panels (1) aus dem Polymermaterial, das einen Umfang aufweist, der zumindest grob den Rändern der Öffnung (10) entspricht, sodass eine Nahtzone zwischen den Rändern der Öffnung (10) und dem Umfang des Panels (1) gebildet wird, und Befestigen des Panels (1) an der Öffnung (10) durch Aufbringen eines gehärteten Materials, wie ein zementöses Material, auf die Nahtzone und Ermöglichen, dass das Material härtet.

14. Verfahren nach einem der Ansprüche 11 bis 13, wobei das Panel (1) eine Dicke aufweist, die das 0,1- bis 2-Fache, typischerweise 0,2- bis 1-Fache der Dicke der Wand bei den Abschnitten, die von gehärtetem zementösen Material gebildet werden, beträgt, und wobei das Material der ersten Oberflächenplatte (2) aus thermoplastischen Materialien, wie Polyolefine, Polyester und Polyamide, und aus duroplastischen Materialien, zum Beispiel verstärkte Duroplaste, ausgewählt ist.

## Revendications

1. Paroi d'une structure comprenant un matériau cimentaire moulé, dans laquelle ladite paroi comprend une première partie et une seconde partie, dans laquelle la première partie est constituée d'un panneau (1) d'un matériau polymère, dans laquelle ledit panneau (1) comporte un passage constitué à l'intérieur de celui-ci, ladite première partie étant couplée à ladite seconde partie de la paroi (9), la seconde partie de la paroi (9) se composant du matériau cimentaire moulé,
**caractérisé en ce que** le panneau (1) est fabriqué en matériaux thermoplastiques et présente une structure se composant de profils creux allongés, avec des axes centraux droits et parallèles, les profils étant soudés latéralement les uns aux autres pour former un panneau à double paroi.

2. Paroi selon la revendication 1, dans laquelle la première partie de la paroi présente une première épaisseur et la seconde partie de la paroi (9) présente une seconde épaisseur, la première épaisseur étant de 0,1 à 2 fois, généralement de 0,2 à 1 fois la seconde épaisseur.

3. Paroi selon l'une quelconque des revendications précédentes, dans laquelle le panneau (1) comprend une ouverture (8) constituée dans et s'étendant à travers le matériau polymère, ladite ouverture (8) comprenant de préférence un conduit tubulaire.

4. Paroi selon la revendication 3, dans laquelle la paroi comprend en outre une gaine tubulaire comportant une surface extérieure, insérée dans l'ouverture (8) constituée dans et facultativement s'étendant à travers le panneau (1) du matériau tubulaire, ladite gaine tubulaire étant de préférence scellée contre les parois de l'ouverture (8), par exemple pour réduire ou éliminer une fuite de fluide entre la surface extérieure du conduit tubulaire et les parois, de préférence ladite gaine est soudée au panneau (1).

5. Paroi selon la revendication 4, dans laquelle le conduit tubulaire est pourvu d'un collier de scellement, par exemple sous la forme d'une bride, qui peut être scellée contre la paroi en venant en butée contre le collier de scellement pour réduire ou éliminer une fuite de fluide entre la surface extérieure du conduit tubulaire et ladite paroi.

6. Paroi selon l'une quelconque des revendications précédentes, dans laquelle le panneau (1) de matériau polymère comprend :
- une première plaque de surface (2) ;
- une seconde plaque de surface (6), qui est espacée de la première plaque de surface (2) et agencée sur le côté opposé de la première plaque de surface (2) par rapport à un plan central géométrique entre la première plaque de surface (2) et la seconde plaque de surface (6) ; et
- des parties de bord (4, 7) adjacentes de manière périphérique à la première plaque de surface (2) et à la seconde plaque de surface (6), lesdits parties de bord comprenant en outre une partie de console (3) s'étendant vers l'extérieur depuis la partie de bord (4, 7) dans un plan sensiblement parallèle au plan central, ladite partie de console (3) comprend une bride s'étendant vers l'extérieur, en particulier la partie de console (3) comprend une bride qui couvre de 10 à 100 % de la longueur périphérique des parties de bord (4, 7).

7. Paroi selon l'une quelconque des revendications précédentes, dans laquelle le panneau (1) est couplé à la seconde partie de la paroi (9) par un matériau cimentaire durci.

8. Paroi selon l'une quelconque des revendications précédentes, dans laquelle le matériau de la première plaque de surface (2) est sélectionné parmi des matériaux thermoplastiques, comme des polyoléfines, polyesters et polyamides, et parmi des matériaux thermodurcissables, par exemple des thermodurcissables renforcés.

9. Structure en béton comprenant un matériau cimentaire moulé, et comportant une pluralité de parois, dans laquelle au moins l'une des parois est une paroi selon l'une quelconque des revendications 1 à 8.

10. Structure en béton selon la revendication 9, comprenant une chambre d'inspection, une chambre de couplage ou une chambre de pompage, dans laquelle de préférence les extrémités de conduits tubulaires traversant la paroi d'un panneau polymère dans la structure en béton s'ouvrent dans une chambre de couplage pour permettre le montage de moyens de couplage auxdites extrémités.

11. Procédé de formation d'un passage à travers la paroi selon l'une quelconque des revendications 1 à 8, comprenant :
- l'agencement dans la paroi du panneau (1) du matériau polymère, le panneau (1) s'étendant à travers la paroi et formant deux plaques de surface (2, 6) opposées de la paroi dans une première partie de la paroi, et
- la formation dans le panneau (1) d'une ouverture (8) qui s'étend à travers le panneau (1) et qui forme un passage à travers la paroi,
**caractérisé en ce que** le panneau (1) est fabriqué en matériaux thermoplastiques et présente une structure se composant de profils creux allongés, avec des axes centraux droits et parallèles, les profils étant soudés latéralement les uns aux autres pour former un panneau à double paroi.

12. Procédé selon la revendication 11, comprenant l'étape de la fourniture d'un moule définissant la forme de la paroi, l'incorporation dans le moule, à une position prédéfinie, du panneau (1) d'un matériau polymère, dans lequel deux plaques de surface (2, 6) opposées forment des surfaces extérieures à une première partie de la paroi, l'introduction d'un matériau cimentaire non durci dans le moule, de sorte que le matériau cimentaire ne recouvre pas sensiblement les deux plaques de surface (2, 6) opposées du panneau (1) de matériau polymère, et le durcissement du matériau cimentaire dans le moule.

13. Procédé selon la revendication 11, comprenant l'étape de la fourniture de la paroi comportant une ouverture (10) formée dans la paroi, définie par ses bords, le placement du panneau (1) du matériau polymère, présentant un périmètre correspondant au moins globalement aux bords de l'ouverture (10) de sorte qu'il existe une zone de jointure formée entre le bord de l'ouverture (10) le périmètre du panneau (1), et la fixation du panneau (1) à l'ouverture (10) par l'application d'un matériau de durcissement, comme un matériau cimentaire, à ladite zone de jointure, et le fait de laisser le matériau durcir.

14. Procédé selon l'une quelconque des revendications 11 à 13, dans lequel le panneau (1) présente une épaisseur qui est de 0,1 à 2 fois, généralement de 0,2 à 1 fois l'épaisseur de la paroi aux parties formées par le matériau cimentaire durci, et dans lequel le matériau de la première plaque de surface (2) est sélectionné parmi des matériaux thermoplastiques, comme des polyoléfines, polyesters et polyamides, et parmi des matériaux thermodurcissables, par exemple des thermodurcissables renforcés.
